# EUROPÄISCHE PATENTSCHRIFT

(11) **EP 1 866 147 B1**
(45) Veröffentlichungstag und Bekanntmachung des Hinweises auf die Patenterteilung: **16.07.2008**
(21) Anmeldenummer: 06701534.7
(22) Anmeldetag: 02.02.2006
(51) Int. Cl.: B32B 3/30, B32B 15/08, B65D 77/20

(54) **VERFAHREN HUR HERSTELLUNG EINES VERBUNDMATERIALS FÜR VERSCHLUSSELEMENTE, SOWIE DESSEN VERWENDUNG**
METHOD FOR PRODUCTION OF A COMPOSITE MATERIAL FOR CLOSURE ELEMENTS AND USE THEREOF
PROCEDE DE PRODUCTION D'UN MATERIAU COMPOSITE POUR ELEMENTS DE FERMETURE ET SON UTILISATION

(30) Priorität: 17.03.2005 AT 4512005
(43) Veröffentlichungstag der Anmeldung: 19.12.2007
(73) Patentinhaber: TEICH AKTIENGESELLSCHAFT, 3200 Weinburg (AT)
(72) Erfinder: NEKULA, Lambert, A-3202 Hofstetten (AT); SCHEDL, Adolf, A-3200 Obergrafendorf (AT)
(74) Vertreter: Dungler, Karin
(86) Internationale Anmeldenummer: PCT/AT2006/000040
(87) Internationale Veröffentlichungsnummer: WO 2006/096894

(56) Entgegenhaltungen:
- EP-A- 1 010 641
- EP-A- 1 340 694
- WO-A-01/74685
- WO-A-98/26931

## Beschreibung

Die Erfindung betrifft ein Verfahren zur Herstellung eines Verbundmaterials für Verschlusselemente bestehend aus einem Trägermaterial und einer thermoplastisch verformbaren Schicht mit erhabenen und vertieften Abschnitten, wobei die thermoplastisch verformbare Schicht im Bereich der vertieften Abschnitte dünner als im Bereich der erhabenen Abschnitte ist.

Verbundmaterialien mit erhabenen und vertieften Abschnitten sind in der EP 149 180 A beschrieben und bestehen aus einer Aluminiumfolie mit einer aufextrudierten Kunststoffschicht. Da zweilagige Verbundmaterialien nach dem Ausstanzen in die Form eines Verschlusselementes dazu neigen, einzurollen, wird gemäß der EP 149 180 A vorgeschlagen, diesen Verbund zu prägen, um den bekannten Einrolleffekt zu vermeiden. Jedoch ist der während des Prägevorganges angewendete Druck so hoch, dass das Prägemuster nicht nur an der Kunststoffschicht erzeugt, sondern auch auf die angrenzende Aluminiumfolie durchschlägt. Diese Aluminiumfolie wird jedoch bei Verwendung des Verbundmaterials als Verschlusselement üblicherweise mit einem dekorativen oder auch für den Verbraucher informativen Aufdruck versehen, welcher durch den vorgenannten Prägevorgang entweder unleserlich oder sogar gänzlich zerstört wird.

Gemäß der EP-A-1 010 641 werden Deckel aus einem Trägermaterial vorgeschlagen, welches an einer Oberflächenseite zwar eine geprägte Siegelschicht aufweist, jedoch an der gegenüberliegenden Oberflächenseite glatt und ungeprägt ist. Die Herstellung dieser Deckel erfolgt durch Extrusion oder Koextrusion, wobei die verwendete Kühlwalze eine besondere Oberflächenkonfiguration aufweist, welche zur Ausbildung der geprägten Siegelschicht dient. Da die Prägung allerdings auf einem erstarrenden Kunststofffilm erfolgt, können unerwünschte Inhomogenitäten auftreten.

Der Erfindung liegt somit die Aufgabe zu Grunde, ein Verfahren zur Herstellung von in ihrem Aufbau homogenen Verschlusselementen bereit zu stellen, welche in Stapeln gelagert und dem gemäß in einfacher Weise ihrer Weiterverarbeitung zugeführt werden können und dabei gleichzeitig ein für den Verbraucher annehmbares Erscheinungsbild zeigen.

Erfindungsgemäß wird ein Verfahren der eingangs genannten Art vorgeschlagen, welches dadurch gekennzeichnet ist, dass die thermoplastisch verformbare Schicht durch Kaschieren oder Extrudieren auf das Trägermaterial aufgebracht und anschließend bei gleichzeitigem Anformen auf ihre Erweichungstemperatur erwärmt wird.

Weitere vorteilhafte Ausgestaltungen des erfindungsgemäßen Verfahrens sind gemäß Unteransprüche offenbart.

Die Erfindung betrifft weiters die Verwendung des erfindungsgemäßen Verbundmaterials zum Ausstanzen von Verschlusselementen in Form von Becherplatinen.

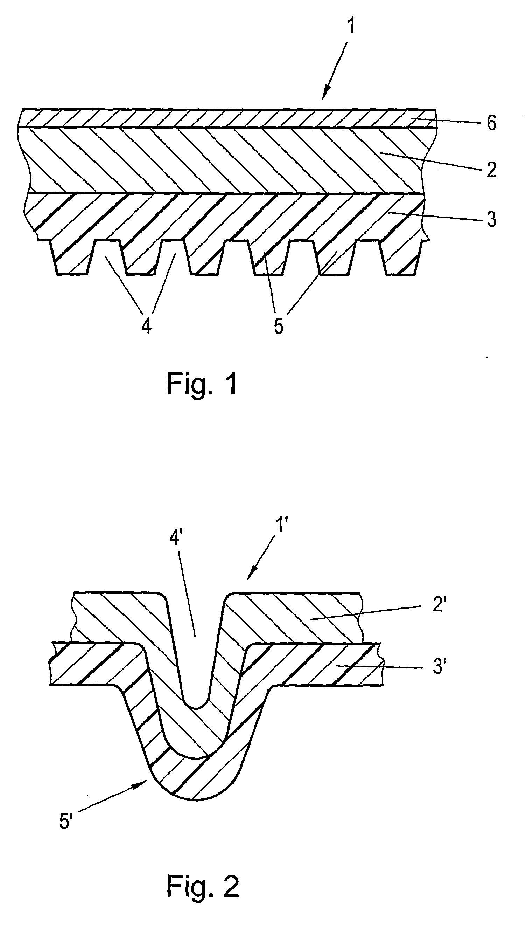

Die Erfindung wird im Folgenden anhand der Figuren 1 bis 6, sowie anhand eines Ausführungsbeispiels näher erläutert.

Dabei zeigt Fig. 1 das erfindungsgemäß hergestellte Verbundmaterial 1, wogegen Fig. 2 ein Verbundmaterial 1' gemäß Stand der Technik, wie in der EP 149 180 A beschrieben, zeigt. Fig. 3 bis 6 zeigen mögliche Vorrichtungen zur Durchführung des erfindungsgemäßen Verfahrens.

Dabei wird das Verbundmaterial beispielsweise derart hergestellt, dass auf das Trägermaterial 2, beispielsweise eine Aluminiumfolie mit einer Dicke in einem Bereich von 10 bis 300 µm, die thermoplastisch verformbare Schicht 3 durch Kaschieren oder Extrudieren aufgetragen wird. Als Trägermaterial eignet sich jedoch auch Papier mit höherer Festigkeit (Papierwichte) sowie Papierverbunde, wie ein Aluminium-Papierverbund. Weiters eignen sich auch Kunststoffe, wie Kunststofffolien oder Kunststofffolienverbunde als Trägermaterial, wobei es jedoch Voraussetzung ist, dass deren Verformungstemperatur wesentlich höher als die der thermoplastischen Schicht ist, sodass deren Struktur beim formgebenden Verfahren zum Erzeugen der vertieften Abschnitte unverändert bleibt.

Um eine bessere Verbundhaftung zwischen den Schichten 2 und 3 zu erzeugen, kann zusätzlich ein Haftvermittler verwendet werden. Als thermoplastisch verformbare Kunststoffe, welche sich zur Bereitstellung der Schicht (3) eignen, werden beispielsweise Polyolefine, wie Polyethylen, Polypropylen, Polybutylen sowie Mischungen daraus, eingesetzt. Ebenso eignen sich Copolymere aus Olefinen, wobei vorteilhafterweise die Copolymerkomponente funktionelle Gruppen, wie Acrylatgruppen, aufweist. Gleichfalls können Styrolhomo- und Copolymere allein oder in Mischung mit den vorgenannten Polyolefinen eingesetzt werden. Weiters ist es denkbar, Polyamide, Polyamidcopolymere sowie Polyester und Polyestercopolymere einzusetzen. Ebenso können natürliche oder synthetische Wachse als thermoplastisch verformbare Kunststoffe eingesetzt werden. Als Beispiele dafür gelten Hotmeltwachse sowie Glanz- oder Trennwachse. Dabei können die thermoplastisch verformbaren Kunststoffe mit Füllstoffen versetzt werden. Vorteilhafterweise eignen sich dazu Talkum, Kreide sowie Kieselsäuren bzw. Mischungen daraus.

Die Dicke der thermoplastisch verformbaren Schicht (3) liegt vorteilhafterweise in einem Bereich von 5 bis 200 µm, besonders vorteilhafterweise in einem Bereich von 12 - 60 µm.

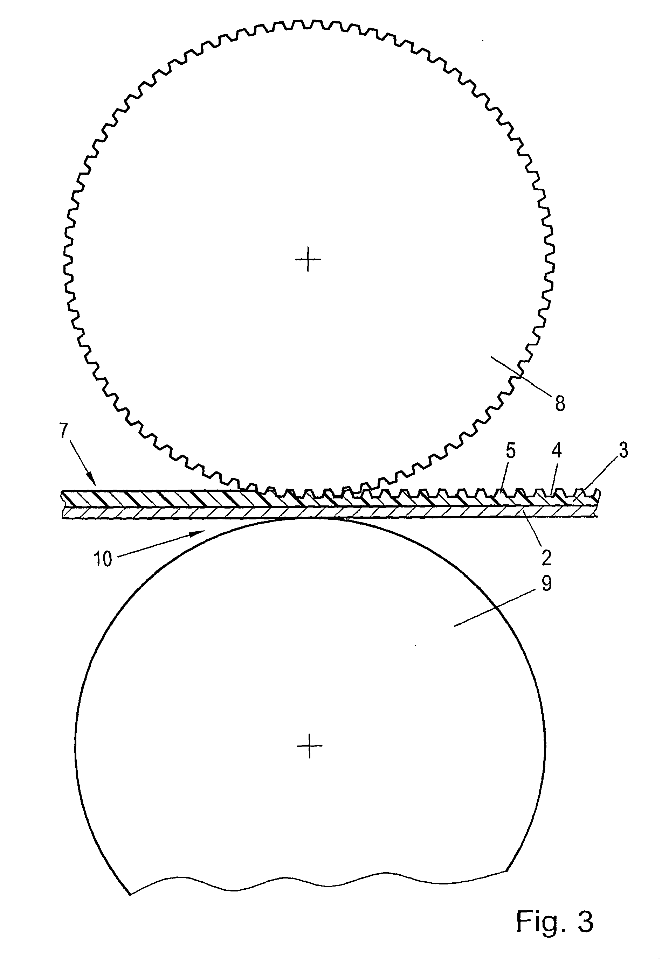

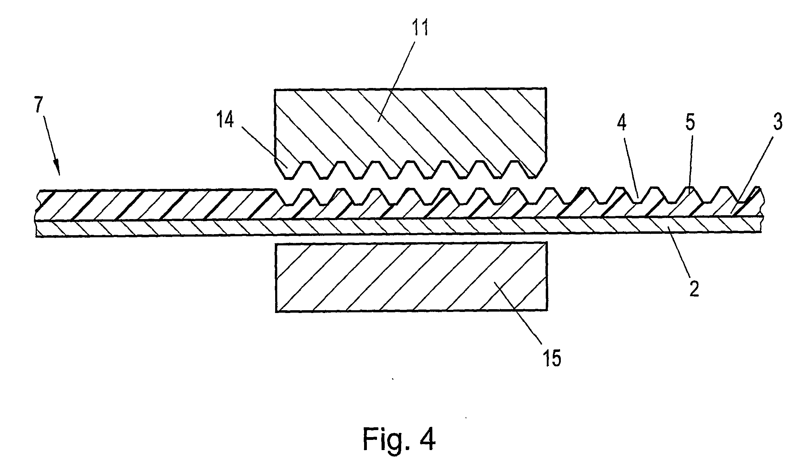

Der durch Kaschieren oder Extrudieren hergestellte Verbund 7 wird, wie in Fig. 3 gezeigt, dem Walzenspalt 10, welcher zwischen der Riffelwalze 8 und der Gegenwalze 9 ausgebildet wird, zugeführt. Dabei zeigt die Riffelwalze 8 an ihrer Oberfläche Vertiefungen, welche durch den Walzendruck in Form der vertieften Abschnitte 4 bzw. der erhabenen Abschnitte 5 auf den Verbund 7 übertragen werden. Die Oberflächentemperatur der Riffelwalze 8 und/oder der Gegenwalze 9 wird in einem Bereich von 60° bis 300°C gehalten. Als Materialien für die Walzen eignen sich sowohl Stahl als auch Kunststoffe, welche vorteilhafter Weise mit so genannten Antihaftbeschichtungen ausgestattet sind. Der im Walzenspalt erzeugte Druck wird einerseits anhand der eingesetzten thermoplastisch verformbaren Kunststoffe sowie anderseits anhand des Temperaturprofils, welches für die Erwärmung der Kunststoffe erforderlich ist, eingestellt. Üblicherweise werden die für konventionelle Prägeverfahren eingesetzten Druckprofile in einem Bereich von bis zu 10 Tonnen bezogen auf eine Breite der üblicherweise in Rollen geführten Verbunde 7 von 1.200 mm angewendet. Anstelle der vorgenannten Riffelwalze 8 als Strukturgeber können ebenso Prägeplatten 11, 12 und 13 - siehe dazu Fig. 4,5 und 6 - eingesetzt werden.

Gemäß Fig. 4 wird eine Prägeplatte 11 mit einer geriffelten Oberfläche 14 in Kombination mit der Gegenplatte 15 eingesetzt. Eine der beiden Platten kann beheizt werden. Zwischen den Platten wird nunmehr der Verbund 7 hindurchgeführt, sodass durch den zwischen den Platten ausgeübten Anpressdruck und bedingt durch die geriffelte Oberfläche die vertieften Abschnitte 4 bzw. die erhabenen Abschnitte 5 erzeugt werden.

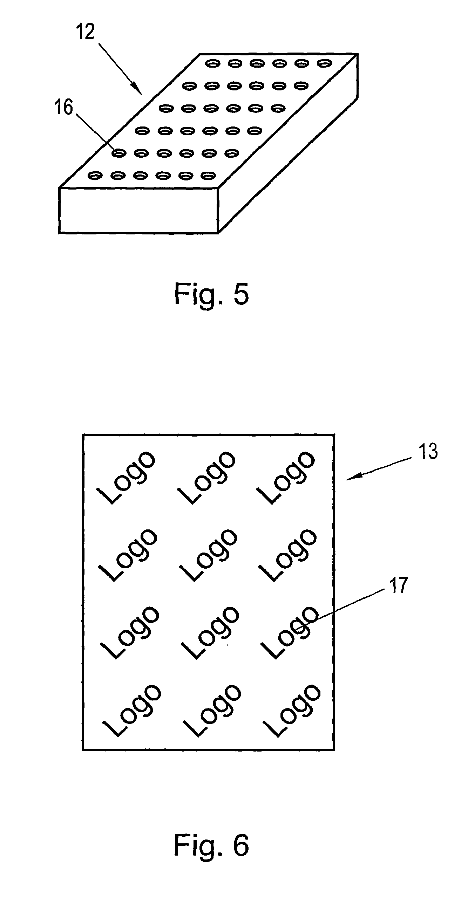

Anstelle einer geriffelten Oberfläche kann auch eine Prägeplatte 12, wie in Fig. 5 gezeigt, eingesetzt werden, welche an ihrer Oberfläche lochförmige Vertiefungen 16 aufweist. Durch Andrücken dieser lochförmigen Vertiefungen 16 entstehen erhabene Abschnitte 5, welche entsprechend der lochförmigen Ausstanzungen 16 kreisförmig ausgebildet sind. Bei Draufsicht auf dieses Verbundmaterial entsteht der Eindruck eines punktförmigen Prägemusters.

Ebenso ist es möglich, eine Prägeplatte 13, wie in Fig. 6 gezeigt, einzusetzen, welche strukturell erhabene Bereiche 17 in Form eines Schriftbildes, nämlich in Form eines Logos, aufweist. Dieses Logo 17 kann die Form eines Firmenschlagwortes oder einer Marke haben, welches durch Anwendung von Druck oder gegebenenfalls durch erhöhte Temperatur entsprechend in die thermoplastisch verformbare Schicht 3 eingeprägt wird. Auch auf diese Weise entstehen vertiefte Abschnitte 4 bzw. erhabene Abschnitte 5.

Das derart hergestellte Verbundmaterial 1, welches einerseits vertiefte Abschnitte 4 sowie anderseits erhabene Abschnitte 5 aufweist, lässt sich durch Stanzen für die Herstellung von Verschlusselementen, beispielsweise in Form von Becherplatinen, verwenden. Diese können, bedingt durch die vorgenannten vertieften bzw. erhabenen Abschnitte 4, 5 nach dem Stanzen in Stapeln gelagert werden. Zwischen einem erhabenen Abschnitt 5 und einem entsprechend dazu vertieften Abschnitt 4 wird so viel Luft eingeschlossen, welche ausreicht, das Aneinanderkleben der gestanzten Becherplatine beim Lagern im Stapel zu vermeiden. Da der angewendete Verformungsdruck so eingestellt wird, dass sich die Vertiefungen nicht über die gesamte Schichtdicke der thermoplastisch verformbaren Schicht hin erstrecken, ist es weiterhin nicht zu befürchten, dass etwaige Prägemuster auf die bedruckte und für den Verbraucher sichtbare Aluminiumfolie durchschlagen. Es wird daher weiters ein für den Konsumenten annehmbares Erscheinungsbild des Verschlusselementes gewährleistet.

An der dem Konsumenten zugewandten Seite des Verbundmaterials kann weiters ein dekorativer und/oder informativer Aufdruck 6 vorgesehen sein.

## Patentansprüche

1. Verfahren zur Herstellung eines Verbundmaterials (1) für Verschlusselemente bestehend aus einem Trägermaterial (2) und einer thermoplastisch verformbaren Schicht (3) mit erhabenen und vertieften Abschnitten (4,5), wobei die thermoplastisch verformbare Schicht (3) im Bereich der vertieften Abschnitte (4) dünner als im Bereich der erhabenen Abschnitte (5) ist, **dadurch gekennzeichnet, dass** die thermoplastisch verformbare Schicht (3) durch Kaschieren oder Extrudieren auf das Trägermaterial (2) aufgebracht und anschließend bei gleichzeitigem Anformen auf ihre Erweichungstemperatur erwärmt wird.

2. Verfahren nach Anspruch 1, **dadurch gekennzeichnet, dass** das Erwärmen und Anformen der thermoplastisch verformbaren Schicht in einem Walzenspalt (10), welcher durch ein Walzenpaar, bestehend aus einer Riffelwalze (8) und einer Gegenwalze (9), erfolgt.

3. Verfahren nach Anspruch 1, **dadurch gekennzeichnet, dass** ein Verbund (7), welcher für die Herstellung des Verbundmaterials (1) geeignet ist, zwischen einer Prägeplatte (11,12,13) und einer Gegenplatte (15) geführt und durch den angewendeten Pressdruck unter gleichzeitigem Erwärmen angeformt wird.

4. Verfahren nach einem der Ansprüche 1 bis 3, **dadurch gekennzeichnet, dass** die thermoplastisch verformbare Schicht (3) an ihrer dem Trägermaterial (2) zugewandten Seite mit einer glatten Oberfläche ausgestattet wird.

5. Verfahren nach einem der Ansprüche 1 bis 4, **dadurch gekennzeichnet, dass** die thermoplastisch verformbare Schicht (3) und das Trägermaterial (2) über einen Haftvermittler miteinander verbunden werden.

6. Verfahren nach einem der Ansprüche 1 bis 5, **dadurch gekennzeichnet, dass** die Dicke der thermoplastisch verformbaren Schicht (3) in einem Bereich von 5 bis 200 µm, vorzugsweise in einem Bereich von 12 bis 60 µm, eingestellt wird.

7. Verfahren nach einem der Ansprüche 1 bis 6, **dadurch gekennzeichnet, dass** die Höhendifferenz zwischen den erhabenen Abschnitten und den vertieften Abschnitten in einem Bereich von 2 bis 180 µm, vorzugsweise 10 bis 50 µm, eingestellt wird.

8. Verfahren nach einem der Ansprüche 1 bis 7, **dadurch gekennzeichnet, dass** für die thermoplastisch verformbare Schicht (3) Kunststoffe aus der Gruppe der Polyamide, Polyamidcopolymere, Polyester, Polyestercopolymere, der Polyolefine, der Polyolefin-Copolymere, wobei zumindest eine Copolymerkomponente funktionelle Gruppen, wie Acrylatgruppen aufweist, sowie der Styrol- Homo- bzw. Copolymere und Mischungen daraus ausgewählt werden.

9. Verfahren nach Anspruch 8, **dadurch gekennzeichnet, dass** den thermoplastisch verformbaren Kunststoffen Füllstoffe zugesetzt werden.

10. Verfahren nach Anspruch 9, **dadurch gekennzeichnet, dass** als Füllstoffe Talkum, Kreide, Kieselsäure sowie Mischungen daraus eingesetzt werden.

11. Verfahren nach einem der Ansprüche 1 bis 10, **dadurch gekennzeichnet, dass** als thermoplastisch verformbare Schicht (3) ein Mehrlagenverbund, welcher aus thermoplastisch verformbaren Polymeren, Copolymeren sowie Mischungen daraus besteht, eingesetzt wird.

12. Verfahren nach einem der Ansprüche 1 bis 11, **dadurch gekennzeichnet, dass** als thermoplastisch verformbare Schicht (3) eine siegelfähige Schicht eingesetzt wird.

13. Verfahren nach einem der Ansprüche 1 bis 12, **dadurch gekennzeichnet, dass** der thermoplastisch verformbaren Schicht (3) körnige Additive zugesetzt werden.

14. Verfahren nach einem der Ansprüche 1 bis 13, **dadurch gekennzeichnet, dass** für die thermoplastisch verformbare Schicht (3) natürliche oder künstliche Wachse eingesetzt werden.

15. Verfahren nach einem der Ansprüche 1 bis 14, **dadurch gekennzeichnet, dass** als Trägermaterial (2) eine Metallfolie, vorzugsweise eine Aluminiumfolie eingesetzt wird.

16. Verfahren nach einem der Ansprüche 1 bis 14, **dadurch gekennzeichnet, dass** als Trägermaterial (2) eine Kunststofffolie eingesetzt wird, deren Verformungstemperatur wesentlich höher als die der thermoplastisch verformbaren Schicht (3) ist.

17. Verfahren nach einem der Ansprüche 1 bis 14, **dadurch gekennzeichnet, dass** als Trägermaterial (2) ein Kunststofffolienverbund eingesetzt wird, dessen Verformungstemperatur wesentlich höher als die der thermoplastisch verformbaren Schicht (3) ist.

18. Verfahren nach einem der Ansprüche 1 bis 14, **dadurch gekennzeichnet, dass** als Trägermaterial (2) ein Aluminium-Kunststoffverbund eingesetzt wird, dessen Verformungstemperatur wesentlich höher als die der thermoplastisch verformbaren Schicht (3) ist.

19. Verfahren nach einem der Ansprüche 1 bis 14, **dadurch gekennzeichnet, dass** als Trägermaterial (2) Papier als Monomaterial oder als Verbund eingesetzt wird.

20. Verfahren nach einem der Ansprüche 1 bis 19, **dadurch gekennzeichnet, dass** das Trägermaterial (2) mit einem Aufdruck (6) versehen wird.

21. Verwendung eines nach einem der Ansprüche 1 bis 20 hergestellten Verbundmaterials zum Ausstanzen von Verschlusselementen in Form von Becherplatinen.

## Claims

1. Method for producing a composite material (1) for closure elements composed of a support material (2) and a thermoplastically deformable layer (3) with raised and sunken sections (4, 5), wherein the thermoplastically deformable layer (3) is thinner in the region of the sunken sections (4) than in the region of the raised sections (5), **characterised in that** the thermoplastically deformable layer (3) is applied by lamination or extrusion onto the support material (2) and is then heated to its softening temperature while simultaneously moulded.

2. Method according to claim 1, **characterised in that** the heating and moulding of the thermoplastically deformable layer occurs in a roll gap (10), which [?] by a roller pair comprising a corrugated roller (8) and a counter roller (9).

3. Method according to claim 1, **characterised in that** a composite (7), which is suitable for the production of the composite material (1), is guided between a die (11, 12, 13) and a counter punch (15) and is moulded and simultaneously heated by the pressing power applied.

4. Method according to one of claims 1 to 3, **characterised in that** the thermoplastically deformable layer (3) is equipped with a smooth surface on its side facing the support material (2).

5. Method according to one of claims 1 to 4, **characterised in that** the thermoplastically deformable layer (3) and the support material (2) are connected to one another by means of an adhesion promoter.

6. Method according to one of claims 1 to 5, **characterised in that** the thickness of the thermoplastically deformable layer (3) is set in a range of 5 to 200 µm, preferably in a range of 12 to 60 µm.

7. Method according to one of claims 1 to 6, **characterised in that** the difference in height between the raised sections and the sunken sections is set in a range of 2 to 180 µm, preferably 10 to 50 µm.

8. Method according to one of claims 1 to 7, **characterised in that** plastics from the group of polyamides, polyamide copolymers, polyesters, polyester copolymers, polyolefins, polyolefin copolymers, wherein at least one copolymer component has functional groups such as acrylate groups, and also styrene-, homo- or copolymers and mixtures thereof, are selected for the thermoplastically deformable layer (3).

9. Method according to claim 8, **characterised in that** fillers are added to the thermoplastically deformable plastics.

10. Method according to claim **9, characterised in that** talcum, chalk, silicic acid as well as mixtures thereof are used as fillers.

11. Method according to one of claims 1 to 10, **characterised in that** a multilayered composite, which is composed of thermoplastically deformable polymers, copolymers as well as mixtures thereof, is used as thermoplastically deformable layer (3).

12. Method according to one of claims 1 to 11, **characterised in that** a sealable layer is used as thermoplastically deformable layer (3).

13. Method according to one of claims 1 to 12, **characterised in that** granular additives are added to the thermoplastically deformable layer (3).

14. Method according to one of claims 1 to 13, **characterised in that** natural or synthetic waxes are used for the thermoplastically deformable layer (3).

15. Method according to one of claims 1 to 14, **characterised in that** a metal foil, preferably an aluminium foil, is used as support material (2).

16. Method according to one of claims 1 to 14, **characterised in that** a plastic foil, which has a deformation temperature substantially higher than that of the thermoplastically deformable layer (3), is used as support material (2).

17. Method according to one of claims 1 to 14, **characterised in that** a plastic foil composite, which has a deformation temperature substantially higher than that of the thermoplastically deformable layer (3), is used as support material (2).

18. Method according to one of claims 1 to 14, **characterised in that** an aluminium-plastic composite, which has a deformation temperature substantially higher than that of the thermoplastically deformable layer (3), is used as support material (2).

19. Method according to one of claims 1 to 14, **characterised in that** paper in the form of single material or composite is used as support material (2).

20. Method according to one of claims 1 to 19, **characterised in that** the support material (2) is provided with an imprint (6).

21. Use of a composite material produced according to one of claims 1 to 20 for stamping out closure elements in the form of tub covers.

## Revendications

1. Procédé pour la fabrication d'un matériau composite (1) pour éléments de fermeture se composant d'un matériau de support (2) et d'une couche à déformation thermoplastique (3) avec des segments en relief et creusés (4, 5), dans lequel la couche à déformation thermoplastique (3) est plus mince dans la zone des segments creusés (4) que dans la zone des segments en relief (5), **caractérisé en ce que** la couche à déformation thermoplastique (3) est placée sur le matériau de support (2) par contre-collage ou extrusion et ensuite est portée à sa température d'amollissement par déformation simultanée.

2. Procédé selon la revendication 1, **caractérisé en ce que** le réchauffement et la déformation de la couche à déformation thermoplastique se produisent dans un espacement entre les cylindres (10), à travers une paire de cylindres se composant d'un cylindre cannelé (8) et d'un cylindre opposé (9).

3. Procédé selon la revendication 1, **caractérisé en ce qu'**un composite (7) est introduit entre une plaque à gaufrer (11, 12, 13) et une contre-plaque (15) et est formé par la pression de moulage appliquée, le cas échéant en la chauffant en même temps.

4. Procédé selon une quelconque des revendications 1 à 3, **caractérisé en ce que** la couche à déformation thermoplastique (3) est pourvue d'une surface lisse sur son côté tourné vers le matériau de support (2).

5. Procédé selon une quelconque des revendications 1 à 4, **caractérisé en ce que** la couche à déformation thermoplastique (3) et le matériau de support (2) sont reliés ensemble par l'intermédiaire d'un agent adhésif.

6. Procédé selon l'une quelconque des revendications 1 à 5, **caractérisé en ce que** l'épaisseur de la couche à déformation thermoplastique (3) est ajustée dans une plage allant de 5 à 200 µm, de préférence dans une plage allant de 12 à 60 µm.

7. Procédé selon l'une quelconque des revendications 1 à 6, **caractérisé en ce que** la différence de hauteur entre les segments en relief et les segments creusés est ajustée dans une plage allant de 2 à 180 µm, de préférence allant de 10 à 50 µm.

8. Procédé selon l'une quelconque des revendications 1 à 7, **caractérisé en ce que** pour la couche à déformation thermoplastique (3) sont choisies des matières synthétiques parmi le groupe des polyamides, des polyamides-copolymères, des polyesters, des polyesters-copolymères, des polyoléfines, des polyoléfines-copolymères, au moins un composant de copolymère présentant des groupes fonctionnels comme des groupes d'acrylate, ainsi que des styrol homopolymères et/ou copolymères et des mélanges de ceux-ci.

9. Procédé selon la revendication 8, **caractérisé en ce que** des matières de remplissage sont introduites dans les matières synthétiques à déformation thermoplastique.

10. Procédé selon la revendication 9, **caractérisé en ce que** sont utilisées comme matières de remplissage du talc, de la craie, de l'acide silique ainsi que des mélanges de ceux-ci.

11. Procédé selon l'une quelconque des revendications 1 à 10, **caractérisé en ce que** comme couche à déformation thermoplastique (3) on utilise un matériau composite multicouche, qui se compose de polymères à déformation thermoplastique, de copolymères ainsi que de mélanges de ceux-ci.

12. Procédé selon l'une quelconque des revendications 1 à 11, **caractérisé en ce que** comme couche à déformation thermoplastique (3) on utilise une couche pouvant être scellée.

13. Procédé selon l'une quelconque des revendications 1 à 12, **caractérisé en ce que** des additifs granuleux sont introduits dans la couche à déformation thermoplastique (3).

14. Procédé selon l'une quelconque des revendications 1 à 13, **caractérisé en ce que** pour la couche à déformation thermoplastique (3) on utilise des cires naturelles ou artificielles.

15. Procédé selon l'une quelconque des revendications 1 à 14, **caractérisé en ce que** pour le matériau de support (2) on utilise une feuille de métal, de préférence une feuille d'aluminium.

16. Procédé selon l'une quelconque des revendications 1 à 14, **caractérisé en ce que** pour le matériau de support (2) on utilise une feuille de matière synthétique dont la température de déformation est sensiblement supérieure à celle de la couche à déformation thermoplastique (3).

17. Procédé selon l'une quelconque des revendications 1 à 14, **caractérisé en ce que** pour le matériau de support (2) on utilise un composite en feuilles de matière synthétique dont la température de déformation est sensiblement supérieure à celle de la couche à déformation thermoplastique (3).

18. Procédé selon l'une quelconque des revendications 1 à 14, **caractérisé en ce que** pour le matériau de support (2) on utilise un composite en matière synthétique - aluminium, dont la température de déformation est sensiblement supérieure à celle de la couche à déformation thermoplastique (3).

19. Procédé selon l'une quelconque des revendications 1 à 14, **caractérisé en ce que** pour le matériau de support (2) on utilise du papier comme matériau unique ou comme élément de liaison.

20. Procédé selon l'une quelconque des revendications 1 à 19, **caractérisé en ce que** le matériau de support (2) est pourvu d'une impression (6).

21. Utilisation d'un matériau composite produit selon l'une quelconque des revendications 1 à 20 pour le matriçage d'éléments de fermeture en forme de platines à godets.
